# EUROPEAN PATENT SPECIFICATION

(11) **EP 1 374 611 B1**
(45) Date of publication and mention of the grant of the patent: **02.02.2005**
(21) Application number: 02708382.3
(22) Date of filing: 19.03.2002
(51) Int. Cl.: H04Q 7/32

(54) **INSTALLING OF SOFTWARE APPLICATIONS INTO A TERMINAL DEVICE**
INSTALLATION VON SOFTWAREANWENDUNGEN IN EINEM ENDGERÄT
INSTALLATION D'APPLICATIONS LOGICIELLES DANS UN DISPOSITIF TERMINAL

(30) Priority: 30.03.2001 FI 20010670
(43) Date of publication of application: 02.01.2004
(73) Proprietor: TeliaSonera Finland Oyj, 00510 Helsinki (FI)
(72) Inventor: LINDQVIST, Anssi, FIN-00610 Helsinki (FI); PIPPURI, Sami, FIN-00720 Helsinki (FI)
(74) Representative: Simmelvuo, Markku
(86) International application number: PCT/FI2002/000226
(87) International publication number: WO 2002/080598

(56) References cited:
- EP-A2- 1 049 006
- EP-A2- 1 063 834
- WO-A1-00/31943
- WO-A1-99/27730

## Description

### FIELD OF THE INVENTION

The invention relates to telecommunication. In particular, the invention relates to a certification service method in which the information on the software applications included in a terminal device is stored on a server, from which the information can be retrieved e.g. when the terminal device gets damaged or disappears.

### BACKGROUND OF THE INVENTION

The number of software applications included in an individual terminal device is constantly increasing as the storage capacity of the terminal devices increases and more and more new software applications are introduced into the market. At the same time, the update tempo of new versions being published of one software application is quickening. In the same way, software applications are becoming a more and more complicated entities which comprises more and more different settings which the user may make in the software application in question. All this has lead to the situation that the applications included in one terminal device have become a complex entity difficult to handle. One specific problem has arisen in a situation in which the terminal device gets damaged or disappears or something else happens to it due to which the software applications included in it should be reinstalled into a new terminal device. The re-installing of the applications and modifying of their settings to correspond to the previous ones is a process which can take several days. There is thus an obvious need for quickening and facilitating this process.

In the following, the terms to be used are determined. A terminal device is used to mean a device comprising software applications, such as e.g. a PC computer, portable computer, palm-top computer or a mobile station.

The software is usually divided into a piece of operating system software, which comprises the applications associated with the operating system of the terminal device, and into a piece of application software which comprises all the other applications. The term software application is hereinafter used to refer to applications included in both of these application types. The term application is used to mean the same as the term software application.

The term application data is used to mean data which comprises information on one or more software applications. The application data thus comprises e.g. a piece of information on what application version is concerned. Further, in case some software application comprises several components to be installed optionally, the application data comprises in that case a piece of information on what components are installed. In addition, the application data comprises a piece of information on the type of the terminal device, which piece of information is necessary e.g. when there are different versions of the same software application published for different terminal devices.

The term setting data is used to mean data which comprises information on the user settings made in the application, such as e.g. the directories used by the application in question and the settings associated with the outward appearance of the application in question.

The term user data is used to mean data which comprises the documents created/modified by the user using the application.

As a prior-art technique let it be mentioned a certification service in which the data of a mobile station are certified by means of a telecommunication network. By means of this kind of certification service of an intelligent telephone it is possible to store e.g. the user data of a Nokia Communicator terminal device, such as e.g. short messages and contact addresses on a separate certification server. In case the information in the terminal device is lost, the stored data can be returned to,the terminal device. It is further known to store user data on servers of a telecommunication network by means of services located in the telecommunication network.

In addition, known in prior art is a solution in which the applications installed in a terminal device are examined, and an application is updated, if there is an update issued for the application in question. The solution in question comprises an application server placed in the network on which there are stored the updates of the applications, as well as a terminal device of the client that is connected to the application server by way of the telecommunication network. The system enables one to manage the updates of computer software in a centralised manner. As an example of the above-mentioned let it be mentioned patent US 6,151,643, to which reference is made herein as the description of prior art.

Prior art further includes EP-A2-1049006 and WO-A1-9927730. EP-A2-1049006 discloses techniques for enhancing the operation of a personal digital assistant including the automatic downloading, installation and execution of software which modifies the functionality of the PDA. WO-A1-9927730 discloses transferring information recorded on identity cards.

### OBJECTIVE OF THE INVENTION

The objective of the present invention is to disclose a new kind of method and system which eliminate the drawbacks referred to above, or at least significantly alleviate them. One specific objective of the present invention is a certification service method in which the information on the software application included in a terminal device is stored on a server, from which the information can be retrieved e.g. in case the terminal device gets damaged or disappears.

### BRIEF DESCRIPTION OF THE INVENTION

The present invention concerns a method for installing software applications into a second terminal device in accordance with the first terminal device. At first, the application data of the first terminal device is determined, after which a connection is established from the first terminal device to the application register server by way of the telecommunication network, and the determined application data of the first terminal device is stored on the application register server.

According to the invention, the application data of the second terminal device is determined, after which a connection is established from the second terminal device to the application data register by way of the telecommunication network. Next, the differences in the application data of the aforementioned first and second terminal device are determined using either the application register server or the second terminal device. Next, a connection is established from the second terminal device to one or more application servers by way of the telecommunication network. By means of the previously determined differences in the application data of the aforementioned application servers and first and second terminal device, the software applications included in the second terminal device are updated so as to be the same as in the first terminal device. In other words, the software applications that the second terminal lacks are transmitted to and installed into it, and/or updates of such software applications of which the second terminal device has got older versions than the first terminal device are transmitted to and/or installed into it. It must be noted that the term server is used refer to a functional entity. In one embodiment of the invention, the aforementioned application register server and application server are implemented as a physically integrated entity. In other words, one piece of server equipment is maintained in which the functions of both the application register server and application servers are implemented. Further in one embodiment of the invention, the aforementioned application register server and application server are implemented as entities physically separate from each other.

In one embodiment of the invention, the application data of the second terminal device is transmitted to the application register server after a connection has been established from the second terminal device to the application register server, after which the aforementioned determination of the differences in the application data of the first and second terminal device is made using the application register server. Next, the determined differences in the application data of the first and second terminal device are transmitted to the second terminal device.

In one embodiment of the invention, the application data of the first terminal device is transmitted from the application register server to the second terminal device after a connection has been established from the second terminal device to the application register server, after which the aforementioned determination of the differences in the application data of the first and second terminal device is made using the second terminal device.

In one embodiment of the invention, the setting data of the first terminal device is determined and stored on the application register server. Further, from the second terminal device, a connection is established to the application register server by way of the telecommunication network, the setting data of the first terminal device stored on the application register server is transferred to the second terminal device, and the settings of the software applications of the second terminal device are modified utilising the transferred setting data of the first terminal device.

In one embodiment of the invention, the user data of the first terminal device is determined and stored on the application register server, a connection is established from the second terminal device to the application register server by way of the telecommunication network, and the user data of the first terminal device stored on the application register server is transferred to the second terminal device.

In one embodiment of the invention, the aforementioned telecommunication network comprises several different types of subnetworks communicating with each other, such as e.g. an Internet network and a mobile communication network, which are connected to each other in some manner known in itself.

The advantage of the present invention compared to prior art is that it offers to its user a bigger independence of his or her terminal device than before. Since on the application register server connected to the telecommunication network, application data of the user as well as possibly also setting and user data are maintained, the user gets easily all the applications and settings of his or her old terminal device into his or her new terminal device in case s(he) changes his or her old terminal device, or when it disappears or gets damaged.

### BRIEF DESCRIPTION OF THE DRAWINGS

In the following section, the invention will be described by the aid of the accompanying examples of its embodiments with reference to the accompanying drawing, in which
Fig. 1 schematically represents one method in accordance with the invention; and
Fig. 2 schematically represents one method in accordance with the invention.

### DETAILED DESCRIPTION OF THE INVENTION

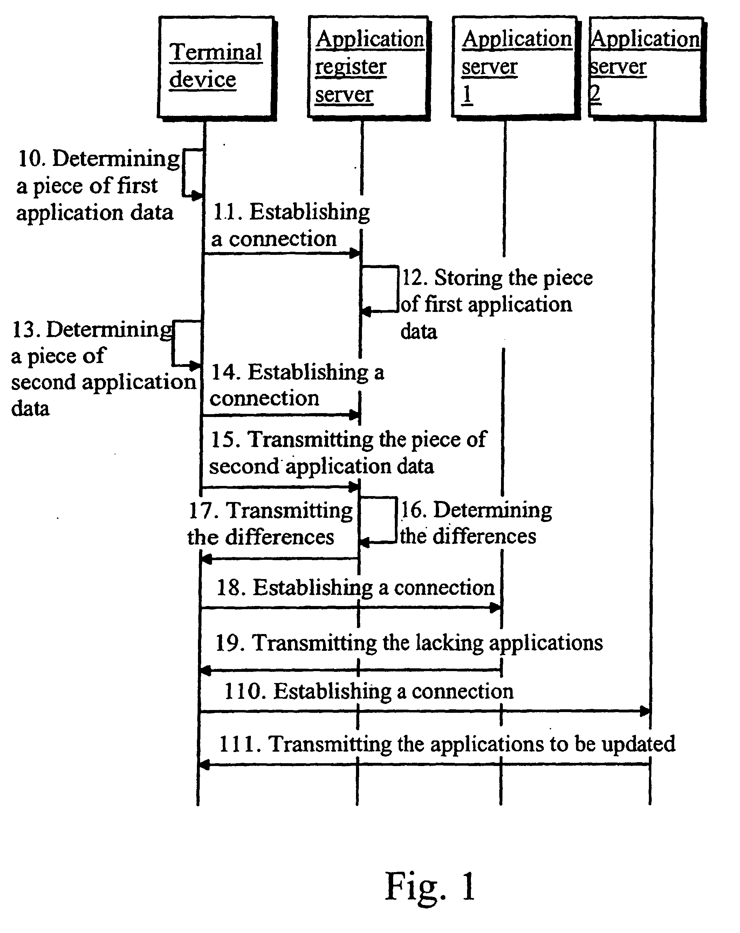

Fig. 1 schematically represents, by way of example, one method in accordance with the invention for installing software applications into a second terminal device in accordance with the first terminal device. At first, at step 10, the application data of the first terminal device is determined, after which at step 11, a connection is established from the first terminal device to the application register server by way of the telecommunication network, and the determined application data of the first terminal device is stored on the application register server at step 12. In the example of Fig. 1, the telecommunication network comprises several different types of subnetworks communicating with each other, such as e.g. an Internet network and a mobile communication network, which are connected to each other in some manner known in itself.

At step 13, the application data of the second terminal device is determined, after which at step 14, a connection is established from the second terminal device to the application register server by way of the telecommunication network. Next, at step 15, the application data of the second terminal device is transmitted to the application register server, after which the determination of the differences in the application data of the first and second terminal device is made using the application register server, step 16. At step 17, the determined differences in the application data of the first and second terminal device are transmitted to the second terminal device. Next, at step 18, a connection is established from the second terminal device to the first application server by way of the telecommunication network. From the first application server in question, the software applications that the second terminal device lacks are transmitted to it to be installed, step 19. At step 110, a connection is established from the second terminal device to the second application server by way of the telecommunication network. The second application server in question is used to transmit to the second terminal device the updates of its outdated software applications to be installed, step 111. It must be noted that the term server is used to refer to a functional entity. In one embodiment of the invention, the aforementioned application register server and application server are implemented as a physically integrated entity. In other words, one piece of server equipment is maintained in which the functions of both the application register server and application servers are implemented. Further in one embodiment of the invention, the aforementioned application register server and application server are implemented as entities physically separate from each other.

In addition in the example of Fig. 1, the setting data of the first terminal device is determined and stored on the application register server. Further, from the second terminal device, a connection is established to the application register server by way of the telecommunication network, the setting data of the first terminal device stored on the application register server is transferred to the second terminal device, and the settings of the software applications of the second terminal device are modified utilising the transferred setting data of the first terminal device.

Further in the example of Fig. 1, the user data of the of the first terminal device is determined and stored on the application register server, a connection is established from the second terminal device to the application register server by way of the telecommunication network, and the user data of the first terminal device stored on the application register server is transferred to the second terminal device.

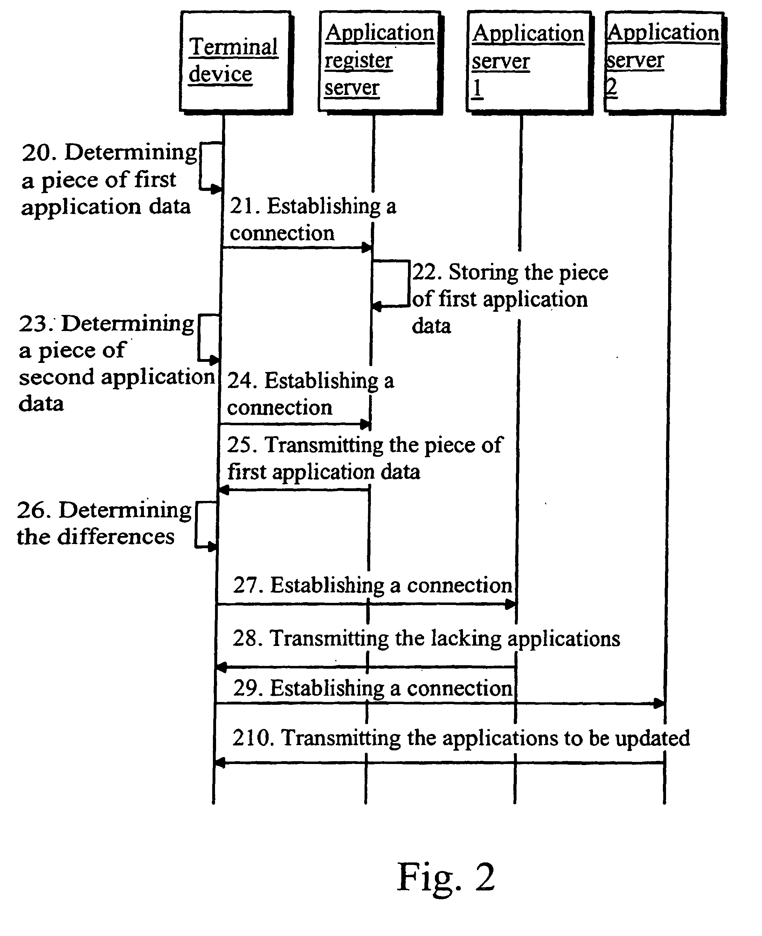

Fig. 2 schematically represents, by way of example, one method in accordance with the invention for installing software applications into a second terminal device in accordance with the first terminal device. At first, at step 20, the application data of the first terminal device is determined, after which at step 21, a connection is established from the first terminal device to the application register server by way of the telecommunication network, and the determined application data of the first terminal device is stored on the application register server at step 22. In the example of Fig. 2, the aforementioned telecommunication network comprises several different types of subnetworks communicating with each other, such as e.g. an Internet network and a mobile communication network, which are connected to each other in some manner known in itself.

At step 23, the application data of the second terminal device is determined, after which at step 24, a connection is established from the second terminal device to the application register server by way of the telecommunication network. Next, at step 25, the application data of the first terminal device is transmitted from the application register server to the second terminal device, after which the aforementioned determination of the differences in the application data of the first and second terminal device is made using the application register server, step 26. Next, at step 27, a connection is established from the second terminal device to the first application server by way of the telecommunication network. From the first application server in question, the software applications that the second terminal device lacks are transmitted to it to be installed, step 28. At step 29, a connection is established from the second terminal device to the second application server by way of the telecommunication network. The second application server in question is used to transmit to the second terminal device the updates of its outdated software applications to be installed, step 210. It must be noted that the term server is used to refer to a functional entity. In one embodiment of the invention, the aforementioned application register server and application server are implemented as a physically integrated entity. In other words, one piece of server equipment is maintained in which the functions of both the application register server and application servers are implemented. Further in one embodiment of the invention, the aforementioned application register server and application server are implemented as entities physically separate from each other.

In addition in the example of Fig. 2, the setting data of the first terminal device is determined and stored on the application register server. Further, from the second terminal device, a connection is established to the application register server by way of the telecommunication network, the setting data of the first terminal device stored on the application register server is transferred to the second terminal device, and the settings of the software applications of the second terminal device are modified utilising the transferred setting data of the first terminal device.

Further in the example of Fig. 2, the user data of the first terminal device is determined and stored on the application register server, a connection is established from the second terminal device to the application register server by way of the telecommunication network, and the user data of the first terminal device stored on the application register server is transferred to the second terminal device.

The invention is not restricted merely to examples referred to above, instead many variations are possible within the scope of the inventive idea defined by the claims.

## Claims

1. A method for installing software applications into a second terminal device in accordance with the first terminal device, which method comprises the steps of:
determining the application data of the first terminal device
establishing a connection from the first terminal device to the application register server by way of the telecommunication network, and
storing the determined application data of the first terminal device on the application register server,
**characterised in that** the method further comprises the steps of:
determining the application data of the second terminal device,
establishing a connection from the second terminal device to the application register server by way of the telecommunication network, and
determining the differences in the application data of the aforementioned first and second terminal device,
establishing a connection from the second terminal device to one or more application servers by way of the telecommunication network, and
transmitting from the application servers in question to the second terminal device the software applications the second terminal device lacks and/or the updates of its outdated software applications to be installed.

2. The method according to claim 1, **characterised in that** the method further comprises the steps of:
transmitting the application data of the second terminal device to the application register server after a connection has been established from the second terminal device to the application register server,
making the determination of the differences in the application data of the first and second terminal device using the application register server, and
transmitting the determined differences in the application data of the first and second terminal device to the second terminal device.

3. The method according to claim 1, **characterised in that** the method further comprises the steps of:
transmitting the application data of the first terminal device from the application register server to the second terminal device after a connection has been established from the second terminal device to the application register server, and
making the determination of the differences in the application data of the first and second terminal device using the second terminal device.

4. The method according to claim 1, 2 or 3, **characterised in that** the method further comprises the steps of:
determining the setting data of the first terminal device and storing it on the application register server,
establishing a connection from the second terminal device to the application register server by way of the telecommunication network,
transferring the setting data stored on the application register server to the second terminal device, and
modifying the settings of the software applications of the second terminal device utilising the transferred setting data of the first terminal device.

5. The method according to claim 1, 2, 3 or 4, **characterised in that** the method further comprises the steps of:
determining the user data of the first terminal device and storing it on the application register server,
establishing a connection from the second terminal device to the application register server by way of the telecommunication network, and
transferring the user data of the first terminal device stored on the application register server to the second terminal device.

6. The method according to claim 1, 2, 3, 4 or 5, **characterised in that** the aforementioned application register server and application server are implemented as physically separate entities.

7. The method according to claim 1, 2, 3, 4 or 5, **characterised in that** the aforementioned application register server and application server are implemented as a physically integrated entity.

8. The method according to claim 1, 2, 3, 4, 5, 6 or 7, **characterised in that** the aforementioned telecommunication network comprises several different types of subnetworks communicating with each other.

## Patentansprüche

1. Verfahren zum Installieren von Softwareanwendungen in einem zweiten Endgerät nach Maßgabe des ersten Endgeräts, umfassend folgende Schritte:
Bestimmen der Anwendungsdaten des ersten Endgeräts, Einrichten einer Verbindung von dem ersten Endgerät zu dem Anwendungsregisterserver über das Telefonnetz, und
Speichern der vorbestimmten Anwendungsdaten des ersten Endgeräts auf dem Anwendungsregisterserver,
**dadurch gekennzeichnet, dass** das Verfahren weiterhin folgende Schritte aufweist:
Bestimmen der Anwendungsdaten des zweiten Endgeräts,
Einrichten einer Verbindung von dem zweiten Endgerät zu dem Anwendungsregisterserver über das Telefonnetz, und
Bestimmen der Unterschiede in den Anwendungsdaten des ersten und des zweiten Endgeräts,
Einrichten einer Verbindung von dem zweiten Endgerät zu einem oder mehreren Anwendungsservern über das Telefonnetz, und
von den fraglichen Anwendungsservern werden zu dem zweiten Endgerät die Softwareanwendungen, die im zweiten Endgerät fehlen, und/ oder die Aktualisierungen von dessen überalterten Software-Anwendungen zur Installation übertragen.

2. Verfahren nach Anspruch 1, **dadurch gekennzeichnet, dass** es weiterhin folgende Schritte aufweist:
Senden der Anwendungsdaten des zweiten Endgeräts zu dem Anwendungsregisterserver, nachdem eine Verbindung von dem zweiten Endgerät zu dem Anwendungsregisterserver eingerichtet wurde,
Festellen der Differenzen in den Anwendungsdaten des ersten und des zweiten Endgeräts unter Verwendung des Anwendungsregisterservers, und
Senden der ermittelten Differenzen in den Anwendungsdaten vom ersten und zweiten Endgerät zu dem zweiten Endgerät.

3. Verfahren nach Anspruch 1, **dadurch gekennzeichnet, dass** es weiterhin folgende Schritte aufweist:
Senden der Anwendungsdaten des ersten Endgeräts von dem Anwendungsregisterserver zu dem zweiten Endgerät, nachdem eine Verbindung von dem zweiten Endgerät zu dem Anwendungsregisterserver eingerichtet wurde, und
Ermitteln der Differenzen in den Anwendungsdaten des ersten und des zweiten Endgeräts unter Verwendung des zweiten Endgeräts.

4. Verfahren nach Anspruch 1, 2 oder 3, **dadurch gekennzeichnet, dass** es weiterhin folgende Schritte aufweist:
Ermitteln der Einstelldaten des ersten Endgeräts und Speichern der Daten auf dem Anwendungsregisterserver,
Einrichten einer Verbindung von dem zweiten Endgerät zu dem Anwendungsregisterserver über das Telefonnetz,
Transferieren der auf dem Anwendungsregisterserver gespeicherten Einstelldaten zu dem zweiten Endgerät, und
Modifizieren der Einstellungen der Softwareanwendungen des zweiten Endgeräts unter Verwendung der transferierten Einstelldaten des ersten Endgeräts.

5. Verfahren nach Anspruch 1, 2, 3 oder 4, **dadurch gekennzeichnet, dass** es weiterhin folgende Schritte aufweist:
Ermitteln der Benutzerdaten des ersten Endgeräts und speichern der Daten auf dem Anwendungsregisterserver,
Einrichten einer Verbindung von dem zweiten Endgerät zu dem Anwendungsregisterserver über das Telefonnetz, und
Transferieren der Benutzerdaten des ersten Endgeräts, die auf dem Anwendungsregisterserver gespeichert sind, zu dem zweiten Endgerät.

6. Verfahren nach Anspruch 1, 2, 3, 4 oder 5, **dadurch gekennzeichnet, dass** der vorerwähnte Anwendungsregisterserver und der Anwendungsserver als baulich getrennte Einheiten implementiert werden.

7. Verfahren nach Anspruch 1, 2, 3, 4 oder 5, **dadurch gekennzeichnet, dass** der vorerwähnte Anwendungsregisterserver und der Anwendungsregister baulich integriert implementiert werden.

8. Verfahren nach Anspruch 1, 2, 3, 4, 5, 6 oder 7, **dadurch gekennzeichnet, dass** das Telefonnetz mehrere unterschiedliche Typen von miteinander kommunizierenden Teilnetzen aufweist.

## Revendications

1. Procédé pour installer des applications logicielles dans un deuxième dispositif terminal conformément au premier dispositif terminal, lequel procédé comprend les étapes consistant à :
déterminer les données d'applications du premier dispositif terminal,
établir une connexion du premier dispositif terminal vers le serveur de registres d'applications au moyen du réseau de télécommunication, et
mémoriser les données d'applications déterminées du premier dispositif terminal sur le serveur de registres d'applications,
**caractérisé en ce que** le procédé comprend, en outre, les étapes consistant à :
déterminer les données d'applications du deuxième dispositif terminal,
établir une connexion du deuxième dispositif terminal vers le serveur de registres d'applications au moyen du réseau de télécommunication, et
déterminer les différences dans les données d'applications des premier et deuxième dispositifs terminaux susmentionnés,
établir une connexion du deuxième dispositif terminal vers un ou plusieurs serveurs d'applications au moyen du réseau de télécommunication, et
transmettre, des serveurs d'applications en question au deuxième dispositif terminal, les applications logicielles manquantes dans le deuxième dispositif terminal et/ou les mises à jour devant être installées de ses applications logicielles périmées.

2. Procédé selon la revendication 1, **caractérisé en ce que** le procédé comprend, en outre, les étapes consistant à :
transmettre les données d'applications du deuxième dispositif terminal au serveur de registres d'applications après l'établissement d'une connexion du deuxième dispositif terminal vers le serveur de registres d'applications,
effectuer la détermination des différences dans les données d'applications des premier et deuxième dispositifs terminaux en utilisant le serveur de registres d'applications, et
transmettre les différences déterminées dans les données d'applications des premier et deuxième dispositifs terminaux au deuxième dispositif terminal.

3. Procédé selon la revendication 1, **caractérisé en ce que** le procédé comprend, en outre, les étapes consistant à :
transmettre les données d'applications du premier dispositif terminal, du serveur de registres d'applications au deuxième dispositif terminal, après l'établissement d'une connexion du deuxième dispositif terminal vers le serveur de registres d'applications, et
effectuer la détermination des différences dans les données d'applications des premier et deuxième dispositifs terminaux en utilisant le deuxième dispositif terminal.

4. Procédé selon la revendication 1, 2 ou 3, **caractérisé en ce que** le procédé comprend, en outre, les étapes consistant à :
déterminer les données de paramétrage du premier dispositif terminal et les mémoriser sur le serveur de registres d'applications,
établir une connexion du deuxième dispositif terminal vers le serveur de registres d'applications au moyen du réseau de télécommunication,
transférer les données de paramétrage mémorisées sur le serveur de registres d'applications au deuxième dispositif terminal, et
modifier les paramètres des applications logicielles du deuxième dispositif terminal en utilisant les données de paramétrage transférées du premier dispositif terminal.

5. Procédé selon la revendication 1, 2, 3 ou 4, **caractérisé en ce que** le procédé comprend, en outre, les étapes consistant à :
déterminer les données d'utilisateur du premier dispositif terminal et les mémoriser sur le serveur de registres d'applications,
établir une connexion du deuxième dispositif terminal vers le serveur de registres d'applications au moyen du réseau de télécommunication, et
transférer les données d'utilisateur du premier dispositif terminal mémorisées sur le serveur de registres d'applications au deuxième dispositif terminal.

6. Procédé selon la revendication 1, 2, 3, 4 ou 5, **caractérisé en ce que** le serveur de registres d'applications susmentionné et le serveur d'applications sont mis en oeuvre en tant qu'entités physiquement séparées.

7. Procédé selon la revendication 1, 2, 3, 4 ou 5, **caractérisé en ce que** le serveur de registres d'applications et le serveur d'applications susmentionnés sont mis en oeuvre en tant qu'entité physiquement intégrée.

8. Procédé selon la revendication 1, 2, 3, 4, 5, 6 ou 7, **caractérisé en ce que** le réseau de télécommunication susmentionné comprend plusieurs types différents de sous-réseaux communiquant les uns avec les autres.
